# EUROPEAN PATENT APPLICATION

(11) **EP 1 898 643 A2**
(43) Date of publication of application: **12.03.2008**
(21) Application number: 07109644.0
(22) Date of filing: 05.06.2007
(51) Int. Cl.: H04N 7/16

(54) **Method for automatically searching for data applications for all channels and video apparatus adopting the method**

(30) Priority: 07.09.2006 KR 20060086057
(71) Applicant: SAMSUNG ELECTRONICS CO., LTD., Suwon-si Gyeonggi-do 442-742 (KR)
(72) Inventor: Kim, Moon-soo, Gyeonggi-do (KR); Kang, Eun-kyung, Seoul (KR); Kim, Do-young, Gyeonggi-do (KR)
(74) Representative: Clark, David James

(57) **Abstract**

A method for automatically searching for data applications for all channels and an video apparatus adopting the method are provided. The method for automatically searching for data applications for all channels includes receiving data application information through at least one of a current channel, which is currently selected, and other channels, and generating a data application list based on the data application information. Accordingly, users can easily know the data applications received through all channels without searching through all channels and can use data applications more conveniently.

## Description

Apparatuses and methods consistent with the present invention relate to automatically searching for data applications for all channels.

Video apparatuses receive images via an antenna and display the images. They include televisions, set-top boxes and personal computers for video apparatuses.

Currently, video apparatuses supporting an advanced common application platform (ACAP) and an open cable application platform (OCAP) provide not only images but also a wide range of multimedia data services including images and multimedia data. The data services include information regarding currently broadcasted programs, such as information regarding sports broadcasts and additional information regarding soap opera broadcasts; information not related to currently broadcasted programs, such as real-time news, weather forecasts, stock exchange information; and two-way services such as surveys of public opinion and audience rating surveys. Video apparatuses execute data applications corresponding to each data service received via an antenna to provide the data services.

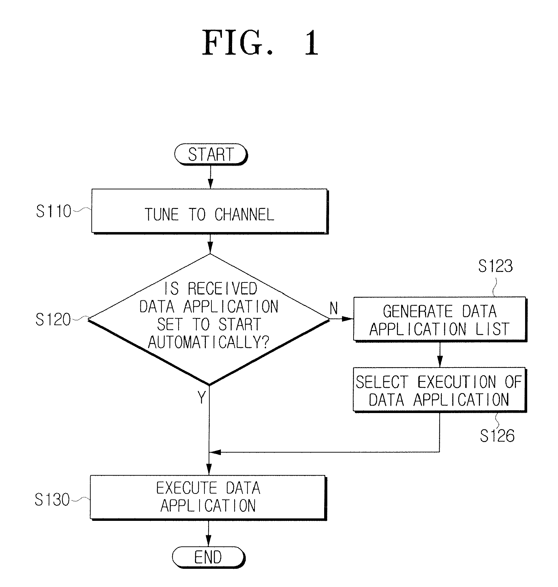

FIG. 1 is a flow chart showing a method for executing a data application in a conventional video apparatus.

In FIG. 1, the conventional video apparatus is tuned to a channel selected by a user and receives a transmission stream (S110). Then, the video apparatus checks an automatic start flag of a parsed application information table (AIT) or extended AIT (XAIT), and determines whether or not a received data application is set to start automatically (S120). More specifically, if the value of the automatic start flag is 1, the video apparatus determines that the data application is set to start automatically.

If the data application is set to start automatically (S120-Y), the video apparatus executes the data application (S 130). If the data application is not set to start automatically (S120-N), the video apparatus generates and displays a data application list received through the channel selected by the user (S123). Subsequently, if the user selects to execute a data application manually (S126), the video apparatus executes the selected data application (S 130).

That is, in a conventional video apparatus, a data application received through a tuned channel is executed automatically or manually. Therefore, a user needs to remember the channel, through which a desired data application is received, in order to execute the desired data application. Otherwise, the user must flip through channels in order to find out which channel provides which data application, to find a desired data application. In addition, when the user tunes to the channel receiving the desired data application, if the data application is not set to start automatically, the data application has to be manually selected and executed from the data application list received through the corresponding channel. Accordingly, the user experiences inconvenience, and more time is required to execute the data application.

Exemplary embodiments of the present invention may address the above disadvantages and other disadvantages not described above.

In a first aspect a method for automatically searching for data applications for all channels is provided, the method comprising: receiving data application information through at least one of a current channel, which is currently selected, and other channels; and generating a data application list based on the data application information.

Suitably, the data application list comprises a list of data applications received through the at least one of the current channel and the other channels, and comprises a channel numbers of the at least one of the current channel and the other channels, and titles of the data applications received through the at least one of the current channel and the other channels.

Suitably, in the operation of generating the data application list, the data application list distinguishes between a data application for the current channel and data applications for the other channels.

Suitably, in the operation of generating the data application list, text of the data application for the current channel is different from text of the data application for the other channels in at least one of brightness, size, shape, color and flickering.

Suitably, in the operation of generating the data application list, an icon which switches the data application list to a data application list for the current channel is generated.

Suitably, the method further comprises executing a data application if the data application is selected from the data application list.

Suitably, in the operation of executing the data application, if the data application is received through the current channel, additional tuning is not necessary, and if the data application is received through one of the other channels, the corresponding channel is tuned.

Suitably, in the operation of executing the data application, whether or not the data application is received is determined by receiving the data application information through the corresponding channel, and the data application is executed if the data application is received.

Suitably, a message indicating that the data application is unavailable is generated and displayed if the data application is not received. Suitably, in these circumstances the data application is discarded from the data application list.

Suitably, in the operation of executing the data application, the data application is executed first even if the data application is not set to start automatically.

In a second aspect, a video apparatus is provided, comprising: an on screen display (OSD) generator which generates a data application list; and a controller which operates the OSD generator to generate the data application list based on data application information received through at least one of a current channel, which is currently selected, and other channels.

Suitably, the data application list comprises a list of data applications received through the at least one of the current channel and the other channels, and comprises channel numbers of the at least one of the current channel and the other channels, and titles of data applications received through the at least one of the current channel and the other channels.

Suitably, the OSD generator generates the data application list by distinguishing between a data application for the current channel and data applications for the other channels.

Suitably, the OSD generator distinguishes text of the data application for the current channel and text of the data applications for the other channels in at least one of brightness, size, shape, color and flickering.

Suitably, the OSD generator generates an icon which switches the data application list to a data application list for the current channel.

Suitably, the controller executes a data application if the data application is selected from the data application list.

Suitably, the video apparatus further comprises a tuner which tunes a channel, wherein the controller operates the tuner not to perform additional tuning if the data application is received through the current channel, and to tune to a corresponding channel if the data application is received through one of the other channels.

Suitably, the controller determines whether or not the data application is received by receiving the data application information received through the corresponding channel, and the controller executes the data application if the data application is received.

Suitably, the video apparatus further comprises a display unit, wherein the controller operates the display unit to generate a message which indicates that the data application is unavailable and display the message on the display unit if the data application is not received.

Suitably, the controller discards the data application from the data application list.

Suitably, the controller executes the data application first even if the data application is not set to start automatically.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a flow chart showing a conventional method for executing a data application of a conventional video apparatus in a related art;
FIG. 2 is a block diagram showing an video apparatus according to an exemplary embodiment of the present invention;
FIG. 3 shows a list of data applications for all channels, which is generated according to a method for automatically searching for data applications for all channels according to an exemplary embodiment of the present invention;
FIG. 4 is a flow chart showing a method for automatically searching for data applications for all channels according to an exemplary embodiment of the present invention; and
FIG. 5 is a flow chart showing a method for automatically searching for data applications for all channels according to another exemplary embodiment of the present invention.

Reference will now be made in detail to the present exemplary embodiments of the present invention, examples of which are illustrated in the accompanying drawings.

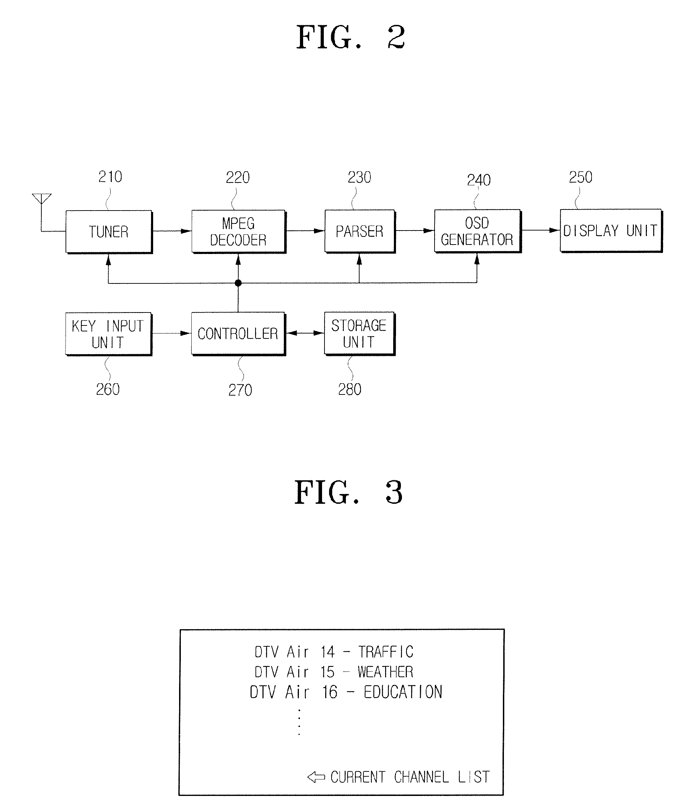

FIG. 2 is a block diagram of an video apparatus according to an exemplary embodiment of the present invention.

The video apparatus automatically searches for data applications which are received through all channels, generates a list of data applications for all channels, automatically tunes to a desired channel selected from the list of data applications for all channels, and automatically executes the desired data application.

Referring to FIG. 2, the video apparatus comprises a tuner 210, a moving picture experts group (MPEG) decoder 220, a parser 230, an on screen display (OSD) generator 240, a display unit 250, a key input unit 260, a controller 270 and a storage unit 280.

The tuner 210 receives a transmission stream selected by a user. The MPEG decoder 220 decodes data contained in the transmission stream received from the tuner 210. The parser 230 parses data application information such as an AIT or XAIT which is decoded by the MPEG decoder 220. The data application information includes the title of the data application, whether or not the data application should be automatically executed, and the like.

The OSD generator 240 generates a list of data applications received through all channels and displays the list on the display unit 250. The list of data applications for all channels (referred to hereinafter as an 'all channel application list') indicates which channel receives which data application.

The key input unit 260 comprises a key for requesting a display of the all channel application list, and a key for selecting a desired data application from the displayed all channel application list.

The controller 270 searches for data applications for all channels if a command requesting the all channel application list is input through the key input unit 260. More specifically, the controller 270 searches for data applications for all channels based on data application information for all channels parsed by the parser 230, generates an all channel application list based on the data application information for all channels, and operates the OSD generator 240 to display the list on the display unit 250.

Subsequently, if the user selects a desired data application from the displayed list using the key input unit 260, the controller 270 operates the tuner 210 to tune to a channel receiving the selected data application and executes the selected data application.

The all channel application list is stored on the storage unit 280 by the controller 270.

As described above, an exemplary video apparatus comprises the tuner 210, the MPEG decoder 220, the parser 230, the OSD generator 240, the display unit 250, the key input unit 260, the controller 270 and the storage unit 280. However, this is just an exemplary embodiment. The video apparatus may also be implemented to comprise an OSD generator 240 which generates a list of data applications, and a controller 270 which operates the OSD generator 240 to generate a list of data applications for all channels based on data application information received through at least one of a current channel and other channels.

FIG. 3 shows a list of data applications for all channels, which is generated in a method for automatically searching for data applications for all channels according to an exemplary embodiment of the present invention.

With reference to FIG. 3, an all channel application list which is generated by searching for data applications received through all channels is shown. The all channel application list contains each channel number and a title of data application for each channel.

For example, the all channel application list shows that channel 14 receives a traffic data application, channel 15 receives a weather data application, and channel 16 receives an education data application.

The all channel application list draws a distinction between a data application for a current channel and data applications for other channels.

In more detail, the text of the current channel number and the title of the data application for the current channel is different from that of other channels in brightness, size, shape, color and flickering. FIG. 3 indicates that channel 16 is a currently tuned channel and receives an education data application, as shown by the larger font size of the text for channel 16 and the title of the data application.

Furthermore, the all channel application list displays an icon (the arrow marked 'current channel list' at lower right) for displaying a list of only data application for the current channel. To the contrary, the current channel list displays an icon for requesting the all channel application list.

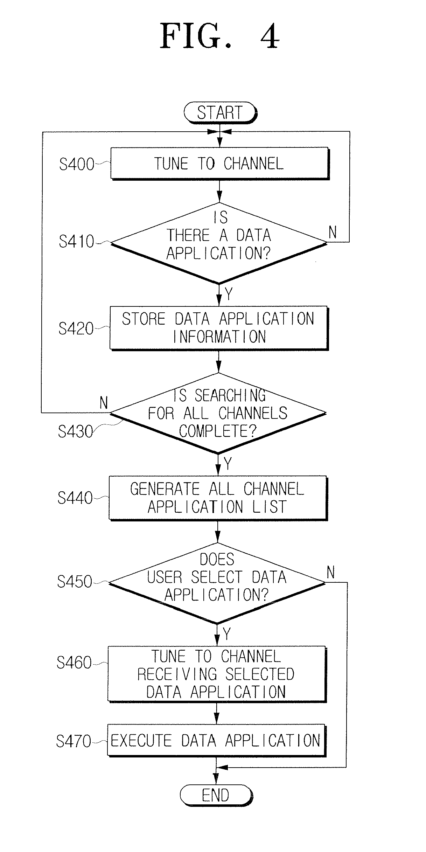

FIG. 4 is a flow chart showing a method for automatically searching for data applications for all channels according to an exemplary embodiment of the present invention.

Referring to FIG. 4, the tuner 210 tunes to a channel selected by a user through the controller 270 (S400).

The controller 270 determines whether or not there is a data application received through the tuned channel (S410). Automatic searching for data applications for all channels is performed by a command of the user. More specifically, if a key signal, which is provided on the key input unit 260, requesting display of the all channel application list is input, the controller 270 searches for data applications for all channels.

If the user inputs a command requesting the all channel application list through the key input unit 260, the controller 270 operates the MPEG decoder 220 to decode data for all channels received through the tuner 210. In addition, the controller 270 operates the parser 230 to parse data application information decoded by the MPEG decoder 220, and determines whether or not there are data applications received through the tuned channels based on the parsed data application information.

There is not only a method for searching for data applications for all channels using a separate interface for requesting the all channel application list as described above, but also a method for searching for data applications for all channels concurrently by automatic channel searching.

If there is no data application received through the currently tuned channel (S410-N), the controller 270 operates the tuner 210 to tune to the next channel.

Alternatively, if there is a data application received through the currently tuned channel (S410-Y), the controller 270 temporarily stores the parsed data application information in the storage unit 280 (S420).

The controller 270 determines whether or not searching for all channels is finished (S430). Digital channels are subject to being searched, so completion of searching for all channels indicates that searching for all digital channels is complete. This is because data applications are transmitted through digital broadcasting channels.

If searching for all channels is not complete (S430-N), the controller 270 operates the tuner 210 to tune to another channel. Accordingly, steps S410 to S430 are repeated.

Alternatively, if searching for all channels is complete (S430-Y), the controller 270 operates the OSD generator 240 to generate an all channel application list based on the data application information for all channels which is temporarily stored in the storage unit 280, and to display the list on the display unit 250 (S440).

The controller 270 determines whether or not the user selects a data application from the all channel application list (S450). More specifically, if the user inputs a key to select a desired data application from the displayed all channel application list using the key input unit 260, the controller 270 determines that a data application is selected.

If the user selects a data application (S450-Y), the controller 270 operates the tuner 210 to tune to a channel receiving the selected data application (S460). If the selected data application is a data application received through the currently tuned channel, additional tuning is not needed, but if the selected data application is a data application received through another channel, the channel has to be tuned.

Subsequently, the controller 270 executes a data application selected by the user among data applications received through the tuned channel (S470). That is, the controller 270 receives data application information received through the tuned channel, and determines whether or not the data application selected by the user is received. If the data application selected by the user is received, the controller 270 directly executes the data application. However, if the data application selected by the user is received when generating the all channel application list but it is determined that the data application is not received based on the data application information, the controller 270 operates the OSD generator 240 to generate a message indicating that the selected data application is not available and display the message on the display unit 250. Subsequently, the controller 270 discards the data application from the all channel application list stored in the storage unit 280.

When executing the data application selected by the user, if the selected data application is not set to start automatically and another data application set to start automatically is received, the controller 270 executes the selected data application first.

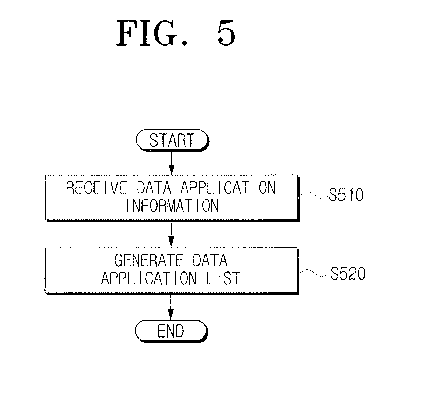

FIG. 5 is a flow chart showing a method for automatically searching for data applications for all channels according to another exemplary embodiment of the present invention.

Referring to FIG. 5, the controller 270 receives data application information through at least one of a current channel and other channels (S510).

Subsequently, the controller 270 operates the OSD generator 240 to generate a data application list based on the received data application information (S520).

In a method for automatically searching for data applications for all channels of FIG. 4, data applications for all channels are searched and an all channel application list is generated, but this is just an example. A method for automatically searching for data applications for all channels of FIG. 5 may be implemented by generating a data application list for a current channel and/or other channels.

As can be appreciated from the above description, the user can easily know the data applications received through all channels without searching through all channels and can use data applications more conveniently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for automatically searching for data applications for all channels, comprising:
receiving data application information through at least one of a current channel which is currently selected, and other channels (S510); and
generating a data application list based on the data application information (S520).

2. The method of claim 1, wherein the data application list comprises a list of data applications received through the at least one of the current channel and the other channels, and comprises a channel number of the at least one of the current channel and the other channels, and titles of the data applications received through the at least one of the current channel and the other channels.

3. The method of claim 1 or 2, wherein, in the operation of generating the data application list, the data application list distinguishes between a data application for the current channel and data applications for the other channels.

4. The method of claim 3, wherein, in the operation of generating the data application list, text of the data application for the current channel is different from text of the data application for the other channels in at least one of brightness, size, shape, color and flickering.

5. The method of claim 3 or 4, wherein, in the operation of generating the data application list, an icon which switches the data application list to a data application list for the current channel is generated.

6. The method of any preceding claim, further comprising executing a data application if the data application is selected from the data application list (S470).

7. The method of claim 6, wherein, in the operation of executing the data application, if the data application is received through the current channel, additional tuning is not necessary, and if the data application is received through one of the other channels, a corresponding channel is tuned.

8. The method of claim 6 or 7, wherein, in the operation of executing the data application, whether or not the data application is received, is determined by receiving the data application information through the corresponding channel, and the data application is executed if the data application is received.

9. The method of claim 8, wherein a message indicating that the data application is unavailable is generated and displayed if the data application is not received.

10. The method of claim 9, wherein the data application is discarded from the data application list.

11. The method of claim 6, wherein in the operation of executing the data application, the data application is executed first even if the data application is not set to start automatically.

12. An video apparatus, comprising:
an on screen display (OSD) generator (240) which generates a data application list; and
a controller (270) which operates the OSD generator (240) to generate the data application list based on data application information received through at least one of a current channel which is currently selected, and other channels.

13. The video apparatus of claim 12, wherein the data application list comprises a list of data applications received through the at least one of the current channel and the other channels, and comprises a channel number of the at least one of the current channel and the other channels, and titles of data applications received through the at least one of the current channel and the other channels.

14. The video apparatus of claim 12 or 13, wherein the OSD generator (240) generates the data application list by distinguishing between a data application for the current channel and data applications for the other channels.

15. The video apparatus of claim 14, wherein the OSD generator (240) distinguishes text of the data application for the current channel and text of the data applications for the other channels in at least one of brightness, size, shape, color and flickering.

16. The video apparatus of claim 12, 13 or 14, wherein the OSD generator (240) generates an icon which switches the data application list to a data application list for the current channel.

17. The video apparatus of any one of claims 12-16, wherein the controller (270) executes a data application if the data application is selected from the data application list.

18. The video apparatus of claim 17, further comprising a tuner (210) which tunes a channel,
wherein the controller (270) operates the tuner (210) not to perform additional tuning if the data application is received through the current channel, and to tune to a corresponding channel if the data application is received through one of the other channels.

19. The video apparatus of claim 17 or 18, wherein the controller (270) determines whether or not the data application is received by receiving the data application information received through the corresponding channel, and the controller executes the data application if the data application is received.

20. The video apparatus of claim 19, further comprising a display unit (250),
wherein the controller (270) operates the display unit (250) to generate a message which indicates that the data application is unavailable and display the message on the display unit (250) if the data application is not received.

21. The video apparatus of claim 20, wherein the controller (270) discards the data application from the data application list.

22. The video apparatus of claim 17, wherein the controller (270) executes the data application first even if the data application is not set to start automatically.
